# EUROPÄISCHE PATENTANMELDUNG

(11) **EP 1 417 888 A2**
(43) Veröffentlichungstag der Anmeldung: **12.05.2004**
(21) Anmeldenummer: 03017547.5
(22) Anmeldetag: 07.08.2003
(51) Int. Cl.: A21B 1/42

(54) **Backofen**

(30) Priorität: 26.06.2003 DE 10328630; 09.11.2002 DE 10252200
(71) Anmelder: Werner & Pfleiderer Lebensmitteltechnik GmbH, 91550 Dinkelsbühl (DE)
(72) Erfinder: Blümel, Frank, 91614 Mönchsroth (DE); Dannenhauer, Bernd, 91550 Dinkelsbühl (DE); Knost, Dieter, 91550 Dinkelsbühl (DE); Fiedler, Rudolf, 91731 Langfurth (DE)
(74) Vertreter: Rau, Manfred, Dr. Dipl.-Ing.

(57) **Zusammenfassung**

Ein Backofen (1) weist einen Zugabeabschnitt mit einer Zugabeöffnung (10) zur Zugabe von Backgut (7), einen Backraum (16) und einen Ausgabeabschnitt mit einer Ausgabeöffnung (51) zur Ausgabe von Backgut auf. Zudem ist eine Umluft-Einrichtung mit einer einen Umluftstrom erzeugenden Umluftquelle (29), einer Umluft-Heizeinrichtung (30) und einem Umluft-Führungskanal (48) vorgesehen, welcher abschnittsweise durch den Backraum (16) gebildet ist. Ein Aufnahmeabschnitt (16a) des Backraums (16) für Backgut (7) ist um eine horizontal verlaufende Rotationsachse mit Hilfe einer Antriebseinrichtung drehbar angetrieben. Es resultiert ein Backofen (1), bei dem Backgut (7) während des Backens bewegt und möglichst gleichmäßig verteilt werden kann.

## Beschreibung

Die Erfindung betrifft einen Backofen mit den Merkmalen gemäß dem Oberbegriff des Anspruches 1.

Ein derartiger Backofen ist durch offenkundige Vorbenutzung bekannt. Derartige Backöfen haben hinsichtlich der Backdauer des Backguts sowie hinsichtlich ihrer Handhabbarkeit noch Verbesserungspotential.

Es ist daher die Aufgabe der vorliegenden Erfindung, einen Backofen der eingangs genannten Art derart weiterzubilden, dass mit diesem eine kürzere Backzeit bei gleichzeitig möglichst verbesserter Handhabbarkeit des Backofens realisiert werden kann.

Diese Aufgabe ist erfindungsgemäß gelöst durch einen Backofen mit den Merkmalen des Kennzeichnungsteils des Anspruchs 1.

Erfindungsgemäß wurde erkannt, dass sich ein effizienteres Backen des Backguts dann ergibt, wenn dieses einerseits im Umluftstrom bewegt ist und andererseits im Backraum möglichst gleichmäßig verteilt ist. Die Bewegung des Backguts im Backraum lässt sich durch den erfindungsgemäß angetriebenen Aufnahmeabschnitt des Backraums realisieren.

Durch eine äußere Begrenzungswand des Backraums nach Anspruch 2 lässt sich eine gleichmäßige Verteilung des Backguts zusätzlich zur Bewegung von diesem im Backraum realisieren.

Ein Backraum mit einer zusätzlichen inneren Begrenzungswand nach Anspruch 3 bietet günstige Strömungsbedingungen für die diesen durchströmende Umluft.

Umluft-Durchtrittsöffhungen nach Anspruch 4 gewährleisten die Möglichkeit einer definierten Positionierung des Backguts während des Backens, was die gleichmäßige Verteilung von diesem begünstigt.

Eine Backgut-Durchtrittsöffnung nach Anspruch 5 vereinfacht die Konstruktion der äußeren Begrenzungswand, da in dieser nur eine Durchtrittsöffnung vorgesehen zu sein braucht, die sowohl für die Zugabe als auch für die Ausgabe von Backgut genutzt werden kann.

Eine mittels eines Aktuators verlagerbare Durchtrittstür nach Anspruch 6 erleichtert die Handhabung des Backofens. Dies gilt entsprechend, wenn nach Anspruch 7 die Backofen-Zugabetür bzw. nach Anspruch 8 die Backofen-Ausgabetür mittels eines Aktuators verlagerbar sind. Die vorzugsweise vorgesehene Anordnung der Backofen-Zugabetür oberhalb des Backraums sowie der Backofen-Ausgabetür unterhalb des Backraums ermöglichen einen Transport des Backguts unter Schwerkrafteinfluss.

Alternativ zu einer die Backgut-Durchtrittsöffnung verschließenden Durchtrittstür nach Anspruch 6 kann eine Durchtrittsöffnung vorgesehen sein, die wahlweise einem bestimmten der Aufnahmeabschnitte zugeordnet werden kann. Diese Zuordnung kann insbesondere so ausgestaltet sein, dass während des Backens die Durchtrittsöffnung einem leeren Aufnahmeabschnitt zugeordnet ist, wobei sich die äußere Begrenzungswand mit der Durchtrittsöffnung während des Backens mit dem leeren Aufnahmeabschnitt synchron mitdreht. Die Aufnahmeabschnitte einerseits und die äußere Begrenzungswand andererseits können bei dieser Ausgestaltung unabhängig voneinander antreibbar sein. Alternativ oder zusätzlich ist es möglich, eine Kupplung zwischen den Aufnahmeabschnitten und der äußeren Begrenzungswand derart vorzusehen, dass diese Komponenten während des Backens zwangsläufig synchron, also mit gleicher Winkelgeschwindigkeit gedreht werden. Zudem kann eine Sicherungseinrichtung vorgesehen sein, welche verhindert, dass sich beim Befüllen bzw. beim Entleeren der Aufnahmeabschnitte die äußere Begrenzungswand unerwünscht mit den Aufnahmeabschnitten mitdreht.

Eine mechanische Kopplung nach Anspruch 9 ermöglicht es, die Durchtrittstür mit dem Aktuator zu verlagern, welcher für die Backofen-Zugabetür und/oder die Backofen-Ausgabetür vorgesehen ist. Die zum im Backofen sich drehenden Teil gehörende Durchtrittstür benötigt dann keinen eigenen Verlagerungsantrieb, was die Konstruktion des Backofens vereinfacht. Prinzipiell kann die Durchtrittstür in der Offen- oder der Schließposition durch einen geeigneten Federmechanismus vorgespannt sein, so dass es ausreicht, die mechanische Kopplung so auszulegen, dass mit ihr eine Positionsverlagerung der Durchtrittstür entgegen dieser Vorspannung möglich ist. In diesem Fall reicht eine Ausgestaltung der mechanischen Kopplung mit einem Gegenkörper pro Backofen-Tür. Bevorzugt ist allerdings eine Ausgestaltung der mechanischen Kopplung mit zwei Gegenkörpem pro Backofen-Tür, da diese so ausgeführt sein kann, dass auf eine Vorspannung der Durchtrittstür verzichtet werden kann.

Eine gesteuerte Verlagerung nach Anspruch 10, welche mittels einer zentralen Steuerung des Backofens vorgegebenen werden kann, führt zur Möglichkeit eines mittels des Backofens durchführbaren vollautomatischen Backvorgangs.

Eine Ausführungsform des Backofens nach Anspruch 11 erleichtert zu Beginn eines Backvorgangs das Aufheizen des Backraums.

Alternativ oder zusätzlich zu der bevorzugten Ausführungsform nach Anspruch 11 kann eine Beschwadungseinrichtung nach Anspruch 12 vorgesehen sein. Die Beschwadungseinrichtung führt zu einer kontrollierten Befeuchtung des Backguts, was zu einer Verbesserung des Backergebnisses führt. In Verbindung mit der Vakuumpumpe lässt sich mit der Beschwadungseinrichtung ein gleichmäßigeres Befeuchten des Backgutes realisieren, was das Backergebnis nochmals verbessert.

Die gleichmäßige Verteilung des Backguts kann durch die statistische Verteilung von diesem aufgrund der durch die Rotation des mindestens einen Aufnahmeabschnitts auftretenden Kräfte erreicht werden. Alternativ kann bei einer Unterteilung des Backraums in eine Mehrzahl von Aufnahmeabschnitten durch Trennwände nach Anspruch 13 eine derartige Gleichverteilung auch erzwungen werden. Die Aufnahmeabschnitte können hierbei ihrerseits einem oder mehreren Stücken Backgut Platz bieten.

Aufnahmeabschnitte gemäß Anspruch 14 führen zu einer zwingenden Positionierung jedes einzelnen Stückes Backgut, so dass eine vorgegebene Verteilung des Backguts im Backraum optimal erreicht werden kann. Die insbesondere hierbei einsetzbaren Aufnahmekörbe können, wenn sie zum Beispiel aus einem entsprechenden Geflecht gefertigt sind, einen guten Luftdurchsatz gewährleisten. Alternativ können zur entsprechenden Beeinflussung des Backergebnisses auch Aufnahmekörbe ohne Durchbrechungen zum Umluftdurchtritt eingesetzt werden.

Die Unterteilung der Aufnahmeabschnitte in Gruppen gemäß Anspruch 15 führt zu einer konstruktiv relativ einfachen Realisierung der Vereinzelung der Stücke Backgut in den Aufnahmeabschnitten. Ein bevorzugt einsetzbarer Tragrahmen vereinfacht die Ausgestaltung der Gruppen nochmals. Aluminium als Rahmenmaterial, welches vorzugsweise einsetzbar ist, führt zu leichten Aufnahmeabschnitten.

Aufnahmeabschnitte nach Anspruch 16 sind konstruktiv einfach ausführbar.

Zur Entleerung der drehbar gelagerten Aufnahmeabschnitte nach den Ansprüchen 14 bis 16 kann ein gesteuert betätigbarer Mitnehmer dienen, welcher mit einem entsprechenden Mitnehmerabschnitt am Aufnahmeabschnitt zusammenarbeitet.

Ausführungsbeispiele der Erfindung werden nachfolgend anhand der Zeichnung näher erläutert. In dieser zeigen:
- Fig. 1: eine perspektivische Ansicht eines Backofens;
- Fig. 2: eine Seitenansicht des Backofens von Fig. 1;
- Fig. 3: einen Schnitt gemäß Linie III-III in Fig. 2;
- Fig. 4: einen Schnitt gemäß Linie IV-IV in Fig. 2;
- Fig. 5: eine perspektivische Ansicht eines entsprechend der Schnittebene von Fig. 4 aufgebrochenen Backofens;
- Fig. 6 und 7: zu Fig. 5 ähnliche gebrochene Teilansichten des Backofens, wobei verschiedene Positionen einer Backofen-Zugabetür sowie einer Durchtrittstür in einer äußeren Backofen-Begrenzungswand dargestellt sind;
- Fig. 8: eine perspektivische Ansicht des Backofens mit abgenommenem Backraumgehäuse;
- Fig. 9: einen zu Fig. 4 ähnlichen Schnitt durch eine weitere Ausführungsform eines Backofens, wobei nur Komponenten des Backofens im Bereich des Backraumgehäuses dargestellt sind;
- Fig. 10: einen Schnitt gemäß Linie X-X in Fig. 9;
- Fig. 11: eine Ausschnittsvergrößerung aus Fig. 10;
- Fig. 12: einen zur Fig. 3 ähnlichen Schnitt durch eine weitere Ausführungsform eines Backofen;
- Fig. 13: eine Aufsicht auf eine Gruppe von Aufnahmeabschnitten für Backgut aus der Ausführungsform nach Fig. 12, wobei fünf von sechs Aufnahmekörben weggelassen sind;
- Fig. 14: einen zu Fig. 4 ähnlichen Schnitt durch die Ausführungsform des Backofens nach den Fig. 12 und 13.
- Fig. 15: eine perspektivische Ansicht eines alternativen Aufnahmeabschnitts, welcher eine Gruppe von Aufnahmeabschnitten nach Fig. 13 ersetzt; und
- Fig. 16 und 17: Momentaufnahmen des Aufnahmeabschnitts nach Fig. 15 während der Entleerung von diesem.

Der in der Zeichnung insgesamt mit dem Bezugszeichen 1 bezeichnete Backofen weist ein quaderförmiges Außengehäuse 2 auf, welches in ein Umluftquellengehäuse 3 und ein Backraumgehäuse 4 unterteilt ist. Das Außengehäuse 2 wird von vier Stützfüßen 5 derart getragen, dass eine Bodenwand 6 des Außengehäuses 2 von der Aufstandsfläche der Stützfüße 5 beabstandet ist.

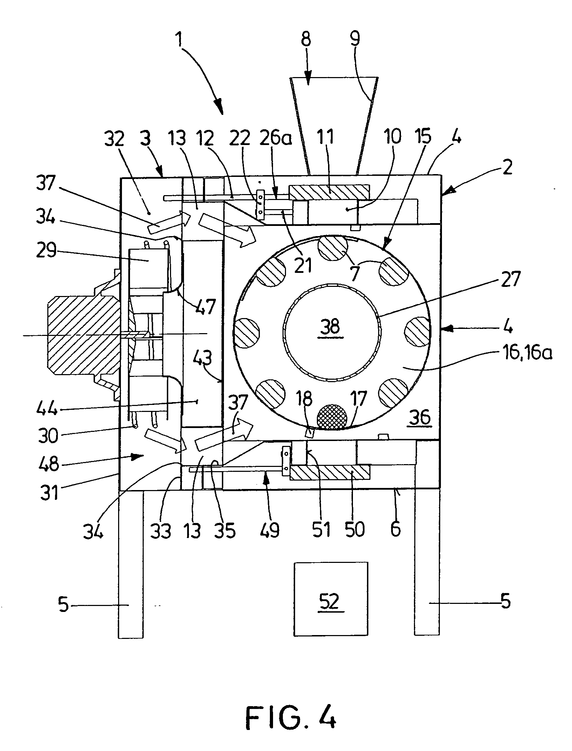

Backgut 7, welches z. B. in Fig. 4 dargestellt ist, z. B. gefrorene, teilgebackene Brötchen, gelangt über einen Zugabetrichter 8 mit rechteckiger Beschickungsöffnung 9 über eine ebenfalls rechteckige Zugabeöffnung 10 ins Innere des Backofens 1. Der Zugabetrichter 8 ist auf die Oberseite des Backraumgehäuses 4 aufgesetzt.

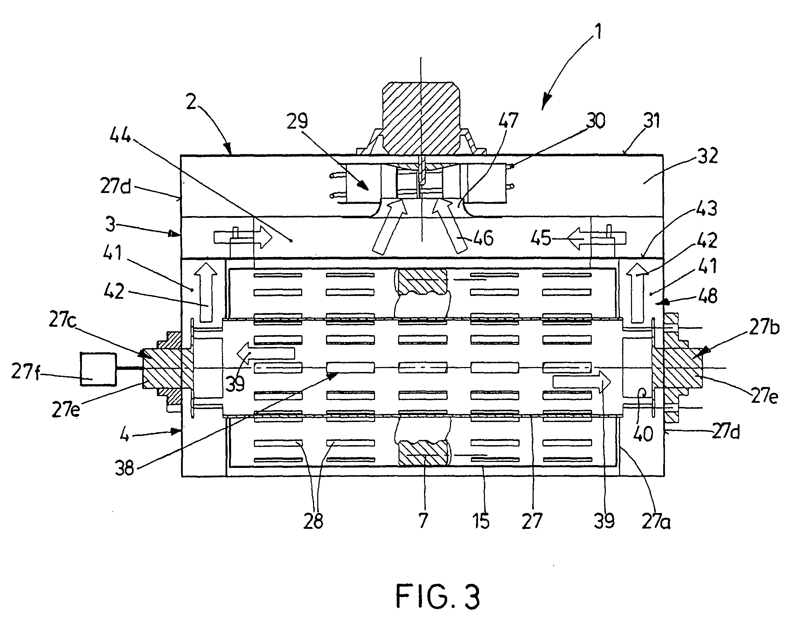

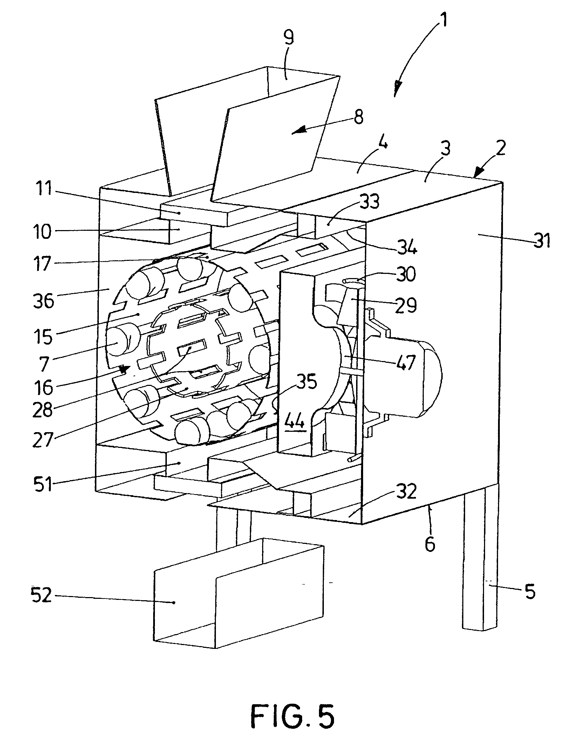

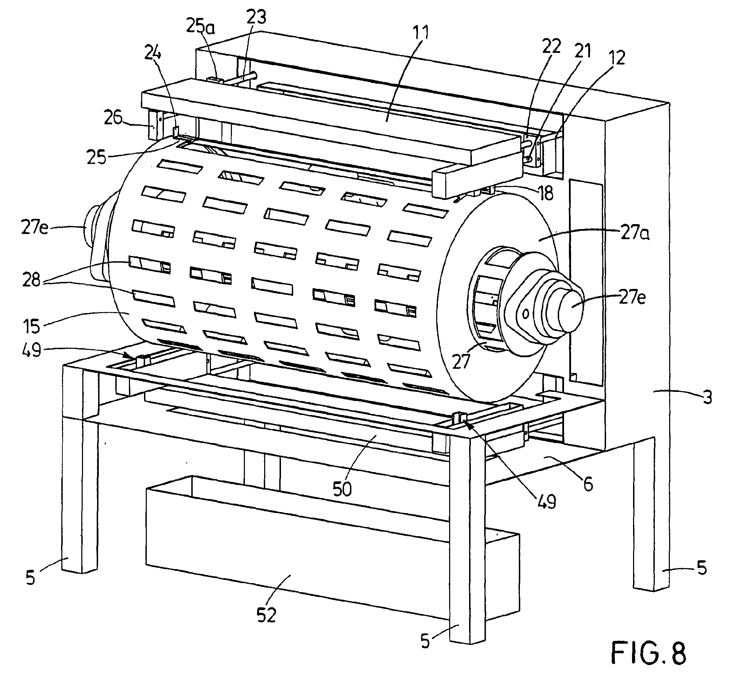

Fig. 3 bis 8 zeigen innere Details des Backofens 1. Die Zugabeöffnung 10 kann mittels eines aufliegenden Zugabeschiebers 11, der die Funktion einer Backofen-Zugabetür hat, verschlossen werden. Hierzu wird eine mit dem Zugabeschieber 11 verbundene und horizontal von diesem abstehende erste Betätigungsstange 12 von einem zum Beispiel in Fig. 4 schematisch angedeuteten Aktuator 13 axial verlagert.

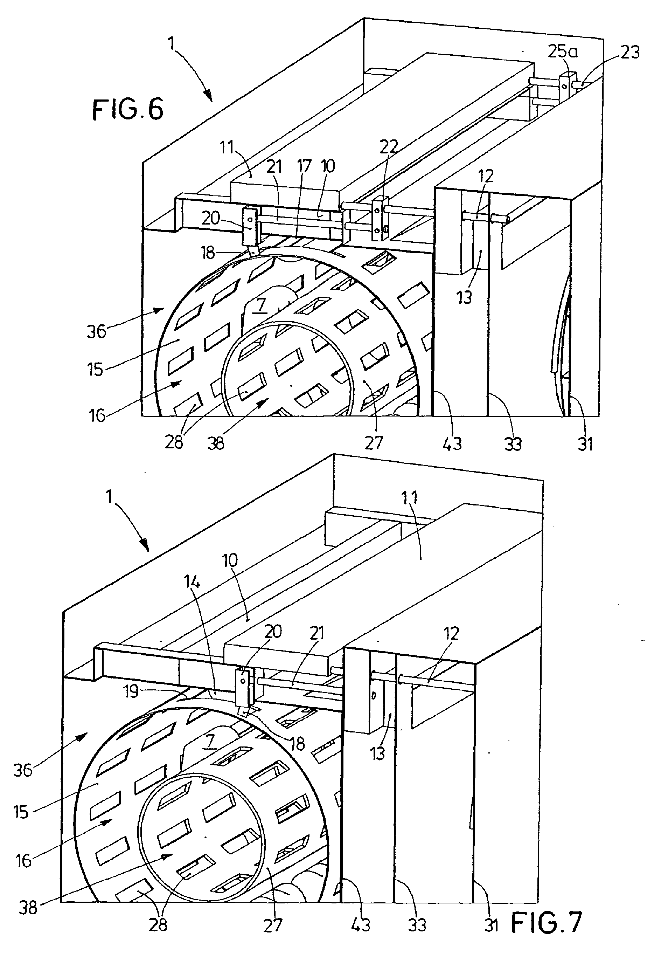

Fig. 4 und 6 zeigen den Zugabeschieber 11 in einer Backposition, in der die Zugabeöffnung 10 vom Zugabeschieber 11 verschlossen ist. Fig. 7 zeigt den Zugabeschieber 11 in einer dieser gegenüber horizontal verlagerten Zugabeposition, in der die Zugabeöffnung 10 freigegeben ist und somit eine Zugabe von Backgut 7 durch die Zugabeöffnung 10 möglich ist.

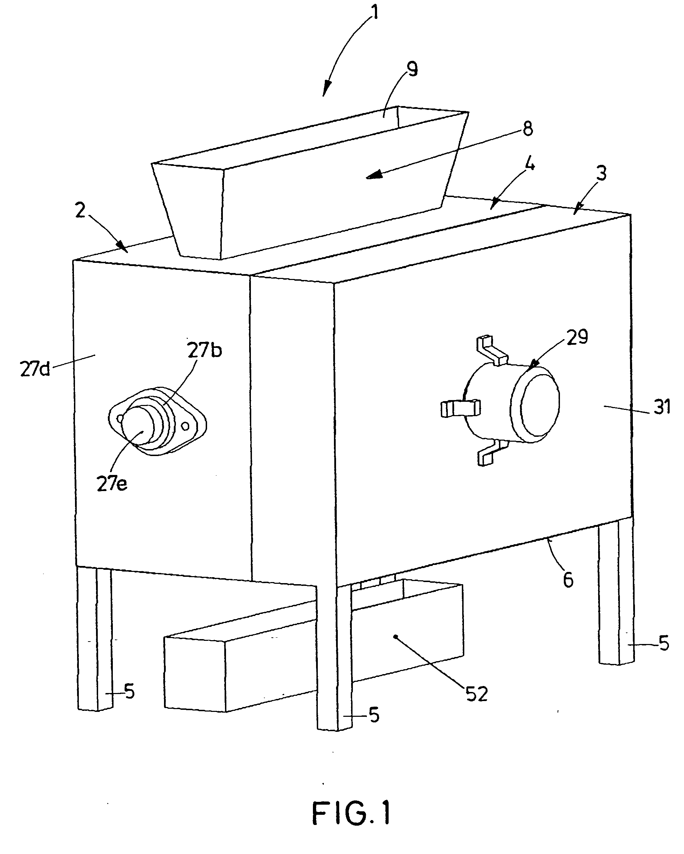

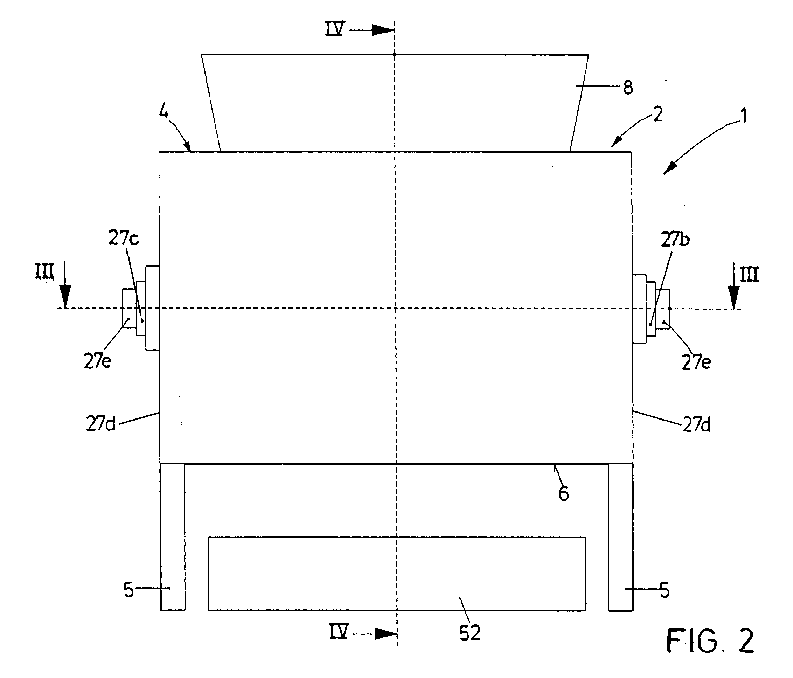

In der Zugabeposition ist zudem eine mit der Zugabeöffnung 10 fluchtende Durchtrittsöffnung 14 in einer trommelförmigen äußeren Begrenzungswand 15 für einen Backraum 16 des Backofens 1 geöffnet. Bei der Ausführungsform des Backofens nach den Fig. 1 bis 8 ist der Backraum 16 als hohlzylindrischer durchgehender Aufnahmeabschnitt 16a ausgeführt. Die Durchtrittsöffnung 14 ist in der Backposition mittels einer Durchtrittstür 17, die als an der Innenseite der äußeren Begrenzungswand 15 angebrachte Schiebetür ausgeführt ist, verschließbar.

Fig. 6 und 7 verdeutlichen, wie, ebenfalls angetrieben durch den Aktuator 13, eine gesteuerte Verlagerung der mit dem Aktuator 13 mechanisch gekoppelten Durchtrittstür 17 von der Backposition nach Fig. 6 in die Zugabeposition nach Fig. 7 erfolgt. Die Durchtrittstür 17 weist hierzu einen fahnenförmigen Mitnehmer 18 auf, der über die Umfangskontur der äußeren Begrenzungswand 15 übersteht und in einer Nut 19 von dieser geführt ist. Dem Mitnehmer 18 ist aktuatorseitig ein Aufnahmekörper 20 als Gegenkörper zugeordnet, von dem in den Fig. 6 und 7 aufgrund der dortigen Schnittebene nur eine Hälfte dargestellt ist. Der Aufnahmekörper 20 ist über eine zweite Betätigungsstange 21 und ein Verbindungsglied 22 mit der ersten Betätigungsstange 12 und damit mit dem Aktuator 13 verbunden.

Bei einer gesteuerten Verlagerung der ersten Betätigungsstange 12 von der Backposition in die Zugabeposition erfolgt aufgrund dieser mechanischen Kopplung gleichzeitig eine entsprechend horizontale Verlagerung des Aufnahmekörpers 20. Letzterer ergreift hierbei den Mitnehmer 18, der seinerseits fest mit der Durchtrittstür 17 verbunden ist. Die Verlagerung des Mitnehmers 18 durch das Zusammenwirken mit dem Aufnahmekörper 20 führt daher zu einem Aufschieben der Durchtrittstür 17 in die in Fig. 7 gezeigte Zugabeposition. Der Verlagerungshub des Aktuators 13 ist so bemessen, dass sowohl in der Backposition als auch in der Zugabeposition der Aufnahmekörper 20 derart außer Eingriff mit dem Mitnehmer 18 kommt, dass eine Rotation der äußeren Begrenzungswand 15 um ihre horizontale Rotations-Symmetrieachse erfolgen kann, ohne dass der Mitnehmer 18 und der Aufnahmekörper 20 hierbei miteinander in Berührung kommen.

Auf der bezogen auf die Schnittebene der Fig. 4 der vorstehend beschriebenen mechanischen Kopplung gegenüberliegenden Seite des Zugabeschiebers 11 und der Durchtrittstür 17 weist der Backofen 1 eine weitere mechanische Kopplung auf. Diese ist zur gerade Beschriebenen derart komplementär, dass durch diese weitere mechanische Kopplung eine gesteuerte entgegengesetzte Verlagerung des Zugabeschiebers 11 sowie der Durchtrittstür 17 von der Zugabeposition in die Backposition analog zum oben Ausgeführten möglich ist. Hierzu weist die zweite mechanische Kopplung eine dritte Betätigungsstange 23, einen zweiten Mitnehmer 24, eine zweite Nut 25, einen zweiten Aufnahmekörper 26, der entgegengesetzt zum ersten Aufnahmekörper 20 geöffnet ist, eine nicht sichtbare vierte Betätigungsstange sowie ein zweites Verbindungsglied 25a auf. Der Aktuator 13 bildet gemeinsam mit den Betätigungsstangen 12, 21, 23, den Mitnehmern 18, 24 sowie den Aufnahmekörpern 20, 26 einen Zugabe-Verlagerungsantrieb 26a.

Bei einer Variante des Backofens 1 ist die Durchtrittstür 17 mittels einer Feder in der Schließstellung, in der sie die äußere Begrenzungswand verschließt, vorgespannt. Es ist daher bei dieser Variante nur eine mechanische Kopplung zum Halten der Durchtrittstür 17 in der Offenstellung erforderlich.

Neben der äußeren Begrenzungswand 15 wird der Backraum 16 durch eine hierzu koaxial angeordnete, ebenfalls trommelförmige innere Begrenzungswand 27 kleineren Durchmessers begrenzt. Über den hohlzylindrischen Backraum 16 beiderseits stirnseitig abschließende Stirnwände 27a ist die äußere Begrenzungswand 15 drehfest mit der inneren Begrenzungswand 27 verbunden. Die innere Begrenzungswand 27 ist mittels zweier angeflanschter Axial/Radial-Lager 27b, 27c in stirnseitig einander gegenüberliegenden Seitenwänden 27d des Backraumgehäuses 4 drehbar gelagert. Eine Antriebswelle 27e, welche drehfest mit der inneren Begrenzungswand 27 verbunden ist, wird hierbei von einem nicht dargestellten Antriebsmotor 27f angetrieben.

Insbesondere Fig. 4 zeigt, dass der Abstand zwischen den beiden Begrenzungswänden 15, 27 typisch doppelt so groß ist wie der Durchmesser eines einzelnen Stücks Backgut 7. Sowohl die äußere Begrenzungswand 15 als auch die innere Begrenzungswand 27 weisen rechteckige Durchtrittsöffnungen 28 für Umluft auf, welche dem Backraum 16 zugeführt wird. Anstelle der rechteckigen Durchtrittsöffnungen 28 können die Begrenzungswände 15, 27 auch als gelochte Bleche ausgeführt sein.

Als Umluftquelle dient ein angetriebener Gebläserotor 29, welchen eine Heizspirale 30 umgibt. Der Gebläserotor 29 und die Heizspirale 30 sind von einer Seitenwand 31 des Umluftquellengehäuses 3 getragen. Vom Gebläserotor 29 gelangt die erzeugte Umluft zunächst in eine erste Umluftkammer 32, die seitlich begrenzt ist von der Seitenwand 31 sowie von einer ersten Zwischenwand 33. Benachbart zur Oberseite des Außengehäuses 2 einerseits und zur Bodenwand 6 andererseits sind in der ersten Zwischenwand 33 Wandöffnungen 34 vorgesehen, über die die erste Umluftkammer 32 durch Umluftkanäle 35 mit einem den Backraum 16 enthaltenden wärmeisolierten Innenraum 36 des Backraumgehäuses 4 in Verbindung steht. Der Innenraum 36 stellt eine zweite Umluftkammer dar, in welche die Umluft ausgehend von der ersten Umluftkammer 32 strömt, wie in Fig. 4 durch Strömungsrichtungspfeile 37 angedeutet. Durch die Umluft-Durchtrittsöffnungen 28 in der äußeren Begrenzungswand 15 gelangt die Umluft anschließend in den Backraum 16 und von dort durch die Umluft-Durchtrittsöffnungen 28 in der inneren Begrenzungswand 27 in eine innere dritte Umluftkammer 38, welche von der inneren Begrenzungswand 27 begrenzt ist. Hier teilt sich die Umluft und strömt, wie in Fig. 3 durch Strömungsrichtungspfeile 39 angedeutet, parallel zur Rotations-Symmetrieachse der dritten Umluftkammer 38.

Über rechteckige Durchtrittskanäle 40, deren Querschnitt wesentlich größer ist wie derjenige der Umluft-Durchtrittsöffnungen 28 und die in der inneren Begrenzungswand 27 benachbart zu den Axial/Radial-Lagern 27b, 27c angeordnet sind, gelangt die Umluft von der dritten Umluftkammer 38 in vierte Umluftkammem 41. Diese sind seitlich begrenzt von den Seitenwänden 27d sowie den Stirnwänden 27a.

Wie durch Strömungsrichtungspfeile 42 angedeutet, strömt die Umluft anschließend durch Durchtrittskanäle in einer benachbart zur äußeren Begrenzungswand 15 angeordneten zweiten Zwischenwand 43 in eine fünfte Umluftkammer 44. Von dieser aus strömt die Umluft, wie durch Strömungsrichtungspfeile 45, 46 angedeutet, durch einen zentral in der ersten Zwischenwand 33 angeordneten Umluftkanal 47 zurück zum Gebläserotor 29.

Die erste Umluftkammer 32, der Umluftkanal 35, der Innenraum 36, die Umluft-Durchtrittsöffnungen 28, der Backraum 16, die dritte Umluftkammer 38, die Durchtrittskanäle 40, die vierte Umluftkammer 41, die fünfte Umluftkammer 44 sowie der Umluftkanal 47 bilden einen Umluft-Führungskanal 48.

Nach Abschluss des Backvorgangs wird die äußere Begrenzungswand 15, gesteuert durch den Antriebsmotor 27f, in eine Ausgangsposition gedreht, in der die Durchtrittstür 17 am Boden des Backraums 16 angeordnet ist. Diese Drehposition ist in Fig. 4 dargestellt. Zur Schnittebene der Fig. 3 spiegelsymmetrisch ist zum Zugabe-Verlagerungsantrieb 26a ein Ausgabe-Verlagerungsantrieb 49 im Gehäuse 2 des Backofens 1 angeordnet. Dieser verlagert in der in Fig. 4 gezeigten Drehposition der äußeren Begrenzungswand 15 die Durchtrittstür 17 zwischen der Backposition und einer Ausgabeposition, in der die Durchtrittstür 17 die Durchtrittsöffnung 14 freigibt. Gleichzeitig verlagert der Ausgabe-Verlagerungsantrieb 49 einen Ausgabeschieber 50, der ebenfalls zum Zugabeschieber 11 spiegelsymmetrisch angeordnet ist und die Funktion einer Backofen-Ausgabetür hat. Durch die Durchtrittsöffnung 14 und eine hiermit fluchtende Ausgabeöffnung 51, welche vom Ausgabeschieber 50 in der Backposition verschlossen ist, fällt das gebackene Backgut 7 in der Ausgabeposition in einen unterhalb des Gehäuses 2 angeordneten Ausgabebehälter 52.

Der Backofen 1 wird folgendermaßen betrieben:

Zum kontinuierlichen Betrieb des Backofens 1 wird im Zugabetrichter 8 ständig eine ausreichende Menge von Backgut 7 vorgehalten. Zu Beginn des Backvorgangs liegt die äußere Begrenzungswand 15 in einer Drehposition vor, in der die Durchtrittstür 17 der Zugabeöffnung 10 benachbart angeordnet ist und mit dieser fluchtet. Zu diesem Zeitpunkt öffnen sich, gesteuert vom Zugabe-Verlagerungsantrieb 26a, der Zugabeschieber 11 und die Durchtrittsöffnung 17.

Das Backgut 7 fällt dann vom Zugabetrichter 8 in den Backraum 16, bis der Zugabeschieber 11 und die Durchtrittstür 17 wieder gesteuert vom Zugabe-Verlagerungsantrieb 26a verschlossen werden. Anschließend werden die Begrenzungswände 15, 27 und damit der Aufnahmeabschnitt 16a des Backraums 16 mittels des Antriebsmotors 27f in Drehung um ihre horizontale Längsachse versetzt. Die Winkelgeschwindigkeit wird bis zum Erreichen der Maximalgeschwindigkeit erhöht. Während des Eindrehvorgangs bis hin zu dieser Maximaldrehzahl verteilt sich das Backgut 7 im Backraum 16 und lagert sich hierbei an einer entsprechenden Anzahl von Umluft-Durchtrittsöffnungen 28 der äußeren Begrenzungswand 15 durch Zentrifugalkraft an, welche in diesem Fall gleichzeitig als Aufnahmen für das Backgut 7 dienen können. Das Backgut 7 verteilt sich so lange im Backraum 16, bis jedes Stück Backgut 7 in einer als Aufnahme dienenden zugeordneten Umluft-Durchtrittsöffnung 28 zu liegen kommt. Die Durchtrittsöffnungen 28 sind im Vergleich zu den typischen Abmessungen des Backguts 7 so dimensioniert, dass das Backgut 7 aufgrund der auf dieses während der Drehung des Backraums 16 wirkenden Zentrifugalkraft nicht durch die Umluft-Durchtrittsöffnungen 28 der äußeren Begrenzungswand 15 gedrückt wird.

Parallel zu diesem Eindrehvorgang wird mittels des Gebläserotors 29 und der Heizspirale 30 Umluft erzeugt, welche den Backraum 16 auf dem beschriebenen Strömungsweg durch den Umluft-Führungskanal 48 durchströmt, so dass das Backgut 7 unter der Wirkung der Umluft während der Rotation des Backraums 16 gebacken wird.

Nach Abschluss des Backvorgangs, der zum Beispiel 12 bis 15 Minuten dauern kann, wird die Drehung der Begrenzungswände 15, 27, gesteuert durch den Antriebsmotor 27f, angehalten. Die äußere Begrenzungswand 15 wird dabei in einer Drehposition gestoppt, in der die Durchtrittsöffnung 17 der Ausgabeöffnung 51 benachbart ist und mit dieser fluchtet. Anschließend wird, gesteuert durch den Ausgabe-Verlagerungsantrieb 49, ein Öffnen der Durchtrittstür 17 sowie des Ausgabeschiebers 50 bewirkt, so dass das Backgut 7 durch die Ausgabeöffnung 51 vom Backraum 16 in den Ausgabekorb 52 fällt, von wo aus es weitertransportiert werden kann.

Eine nicht dargestellte Ausführungsform des Backofens 1 weist zusätzlich eine Vakuumpumpe auf, mit der im Backraum 16 ein vorgegebener Unterdruck einstellbar ist. Gleichzeitig weist diese Ausführungsform des Backofens 1 eine an sich bekannte Beschwadungseinrichtung auf, mit der der Backraum 16 mit Wasserdampf-Schwaden versorgt werden kann.

Zu Beginn des Backvorgangs wird bei dieser Ausführungsform der Backraum 16 mit der Vakuumpumpe zunächst abgepumpt, so dass zu Beginn des Backvorgangs das Aufheizen des Backraums erleichtert ist und das dort befindliche Backgut 7 anschließend durch die Umluft schneller beheizt werden kann. Durch das Zusammenspiel der Vakuumpumpe und der Beschwadungseinrichtung wird zudem eine effizientere Befeuchtung des Backguts durch die Schwaden erzielt.

In der zentralen Steuerung können verschiedene Backprogramme mit Backschritten gespeichert sein. Pro Backschritt können die Parameter Temperatur, Dampfmenge für die Beschwadung, Backzeit, Drehzahl der Begrenzungswände 15, 27 während des Backens, Drehzahl des Gebläserotors 29 sowie Anzahl der Stücke Backgut 7 pro Aufnahmeabschnitt eingestellt werden.

Nachfolgend werden weitere Ausführungsformen von erfindungsgemäßen Backöfen beschrieben. Komponenten, die denjenigen entsprechen, die schon unter Bezugnahme auf die Ausführungsform der Fig. 1 bis 8 beschrieben wurden, tragen die gleichen Bezugszeichen und werden nachfolgend nicht nochmals im Einzelnen diskutiert.

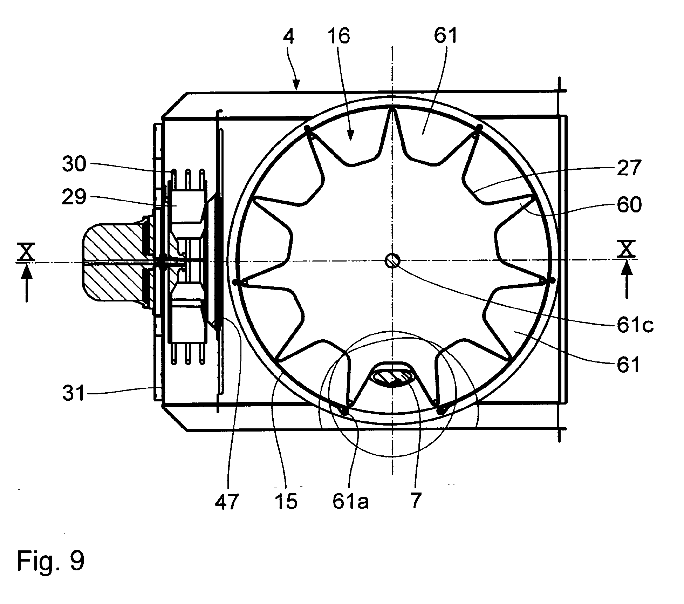

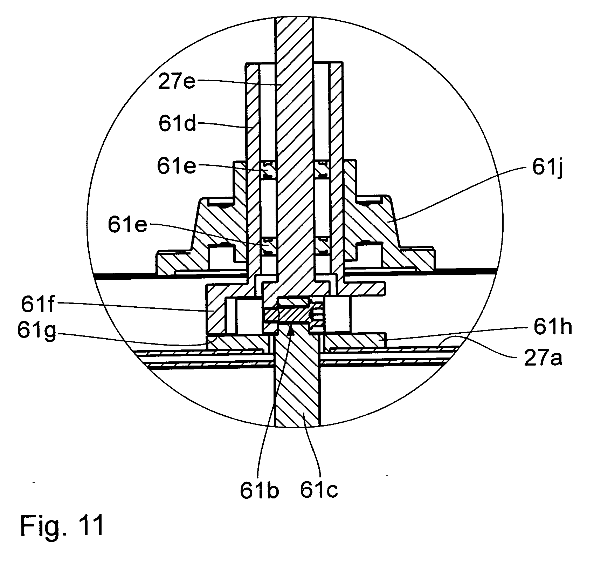

Eine zweite Ausführungsform eines erfindungsgemäßen Backofens 1 ist, was die Komponenten im Bereich des Backraumgehäuses 4 angeht, in den Fig. 9 bis 11 dargestellt. Diese unterscheidet sich von der Ausführungsform nach den Fig. 1 bis 8 dadurch, dass der Backraum 16 durch eine im Schnitt senkrecht zur Rotationsachse sternförmig ausgebildete innere Begrenzungswand 27 mit Hilfe einer Mehrzahl von bezogen auf die Rotationsachse der Begrenzungswände 15, 27 radial verlaufende im Schnitt keilförmig zulaufende Trennwände 60 in eine Mehrzahl von Aufnahmeabschnitten 61 für Backgut unterteilt ist. Die Trennwände 60 stellen dabei die Zacken im sternförmigen Querschnitt der inneren Begrenzungswand 27 dar. Alternativ ist es auch möglich, die Form der Begrenzungswände 15, 27 gemäß Fig. 4 beizubehalten und zwischen ihnen ebene Trennwände derart vorzusehen, dass der Backraum 16 zwischen den Begrenzungswänden 15, 27 in eine Mehrzahl von sektorförmigen Aufnahmeabschnitten unterteilt wird. Die beiden Begrenzungswände 15, 27 können aus luftdurchlässigem Stahldrahtgewebe ausgeführt sein.

Insgesamt sind bei der Ausführung nach Fig. 9 elf Trennwände 60 vorgesehen, so dass der Backraum 16 in elf Aufnahmeabschnitte 61 unterteilt ist. Auch andere Anzahlen von Trennwänden und Aufnahmeabschnitten sind möglich. Längs der äußeren Begrenzungswand 15 verläuft in dieser eine Durchtrittstür 61 a, deren Umfangserstreckung derjenigen eines Aufnahmeabschnitts 61 entspricht. Die äußere Begrenzungswand 15 hat also die Form eines geschlitzten Hohlzylinders. In Fig. 9 ist die Durchtrittsöffnung 61 a in der tiefstliegenden Position dargestellt.

Die äußere Begrenzungswand 15 und die innere Begrenzungswand 27 mitsamt den Trennwänden 60 sind bei der Ausführung nach den Fig. 9 bis 11 unabhängig voneinander um die Rotationsachse antreibbar. Zum Antrieb der inneren Begrenzungswand 27 mit den Trennwänden 60 ist die Antriebswelle 27e über einen Verbindungsflansch 61b mit einer zentral längs der Rotationsachse der inneren Begrenzungswand 27 verlaufenden Abtriebswelle 61 c drehfest verbunden. Die Antriebswelle 27e weist ein drehfest mit ihrem aus dem Backraumgehäuse 4 herausgeführten freien Ende verbundenes Antriebsritzel auf, welches kraftschlüssig mit einem Antriebsmotor verbunden ist. Beiderseits der Stirnwände 27a ist die Antriebswelle 27e über Axial/Radiallager 61e am Backraumgehäuse 4 gelagert. Die Abtriebswelle 61c ist ihrerseits drehfest mit der inneren Begrenzungswand 27 verbunden.

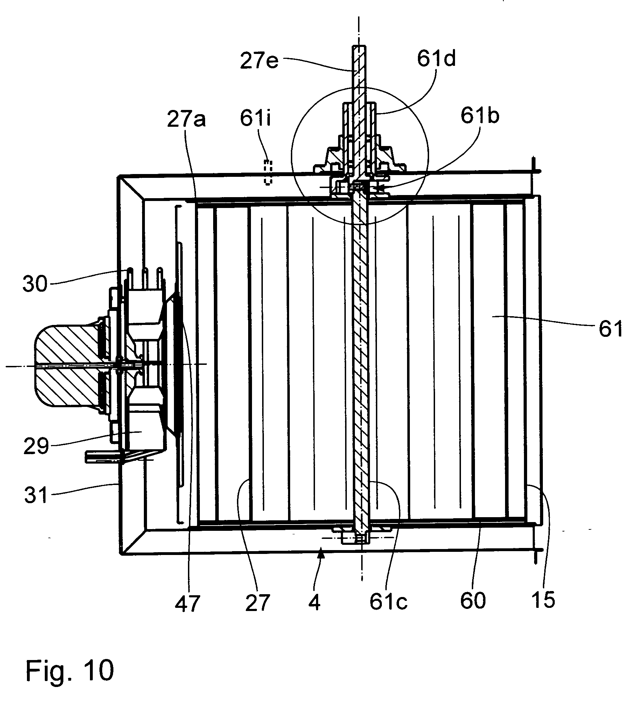

Zum unabhängigen Antrieb der äußeren Begrenzungswand 15 dient ein Hohlwellen-Stummel 61d, welcher die Antriebswelle 27e koaxial umgibt. Der Hohlwellen-Stummel 61 d weist an seinem aus dem Backraumgehäuse 4 herausgeführten freien Ende ebenfalls ein mit diesem drehfest verbundenes Antriebsritzel auf, welches kraftschlüssig mit einem weiteren Antriebsmotor verbunden ist, der unabhängig vom der Antriebswelle 27e zugeordneten Antriebsmotor arbeitet. Über ein äußeres Axial/Radiallager 61j, ist der Hohlwellen-Stummel 61 d axial und radial gelagert. An seinem dem Backraum 16 zugewandten Ende erweitert sich der Hohlwellen-Stummel 61d im Backraumgehäuse 4 stufenförmig zu einem Hohlwellen-Endabschnitt 61 f. Dieser ist bis auf eine Aussparung zum Einführen einer Verbindungsschraube des Verbindungsflansches 61 b rotationssymmetrisch. Über eine in Fig. 10 schematisch dargestellten Bremskupplung 61 i kann die Stirnwand 27a und somit die äußere Begrenzungswand 15 in der nicht angetriebenen Stellung des Hohlwellen-Stummels 61d drehfest am Backraumgehäuse 4 gesichert werden. Die Bremskupplung 61 i wird durch einen nicht dargestellten Aktuator betätigt.

Der Backofen nach den Fig. 9 bis 11 wird mit Backgut befüllt, indem zunächst bei eingekuppeltem Hohlwellen-Stummel 61 d die äußere Begrenzungswand 15 solange um die Rotationsachse gedreht wird, bis die Durchtrittsöffnung 61a in eine Position kommt, die derjenigen, welche in Fig. 9 dargestellt ist, genau gegenüberliegt. Die innere Begrenzungswand 27 wird dabei so mitgedreht, dass in dieser Position der Durchtrittsöffnung 61 a ein Aufnahmeabschnitt 61 genau unterhalb der Durchtrittsöffnung 61 a zu liegen kommt. Anschließend wird der Zugabeschieber 11 (vgl. Fig. 4) zum Befüllen dieses ersten der Durchtrittsöffnung 61a zugeordneten Aufnahmeabschnitts 61 solange geöffnet, bis eine abgezählte Anzahl von Stücken Backgut 7, z. B. fünf Stücke, in diesen Aufnahmeabschnitt 61 eingefüllt ist. Dieser Aufnahmeanschnitt 61 wird so mit einer längs der Rotationsachse angeordneten Reihe von Stücken Backgut 7 befüllt.

Anschließend wird die innere Begrenzungswand 27 z. B. in Fig. 9 im Uhrzeigersinn so weit gedreht, bis der nächste Aufnahmeabschnitt 61 die Position des gerade befüllten Aufnahmeabschnitts 61 eingenommen hat. Bei dieser Verdrehung der inneren Begrenzungswand 27 ist der Hohlwellen-Stummel 6 1 d nicht angetrieben und die Bremskupplung 61 i in Sicherungsposition, so dass eine Verdrehung der äußeren Begrenzungswand 15 verhindert ist. Die Durchtrittsöffnung 61a bleibt somit in ihrer oberen Befüllposition. Dann wird dieser nächste in Befüllposition gedrehte Aufnahmeabschnitt 61 befüllt. Dieser Vorgang wiederholt sich taktweise, bis zehn der elf Aufnahmeabschnitte 61 befüllt sind. Anschließend wird der letzte leere Aufnahmeabschnitt 61 relativ zur äußeren Begrenzungswand 15 so in Position gebracht, dass die Durchtrittsöffnung 61 a diesem leeren Aufnahmeabschnitt 61 zugeordnet ist. In dieser Position wird die Bremskupplung 61 i gelöst, sodass der Hohlwellen-Stummel 61 d angetrieben werden kann.

Die Antriebswelle 27e und der Hohlwellen-Stummel 61 d treiben dann die beiden Begrenzungswände 15, 27 mit gleicher Winkelgeschwindigkeit während des Backens synchron an, so dass die Durchtrittsöffnung 61 a dem leeren Aufnahmeabschnitt 61 zugeordnet bleibt. Nach Abschluss des Backvorgangs werden die Begrenzungswände 15, 27 zunächst in eine Position gebracht, bei der die Durchtrittsöffnung 61a in der in Fig. 9 gezeigten tiefstgelegenen Position ist, wobei zunächst die Zuordnung zum leeren Aufnahmeabschnitt 61 erhalten bleibt. Der Hohlwellen-Stummel 61d wird dann nicht mehr angetrieben und die Bremskupplung 61 i in die Sicherungsposition gebracht. Anschließend wird nur die innere Begrenzungswand 27 taktweise derart gedreht, dass immer ein befüllter Aufnahmeabschnitt 61 der Durchtrittsöffnung 61 a zugeordnet wird. Alternativ kann die Begrenzungswand 27 hierbei auch kontinuierlich gedreht werden. Das gebackene Backgut 7 fällt dann durch die Durchtrittsöffnung 61a und den Ausgabeschieber 50 in den Ausgabebehälter 52. Die Situation beim Entleeren des letzten Aufnahmeabschnitts 61 ist in Fig. 9 dargestellt.

Die Steuerung des Ein- bzw. Auskuppelns des Hohlwellen-Stummels sowie die Steuerung der Drehbewegungen der Begrenzungswände 15, 27 bei der Beschickung bzw. bei der Entleerung der Aufnahmeabschnitte sowie die Betätigung der Bremskupplung 61 i erfolgt zentral gesteuert über eine nicht dargestellte Steuereinrichtung.

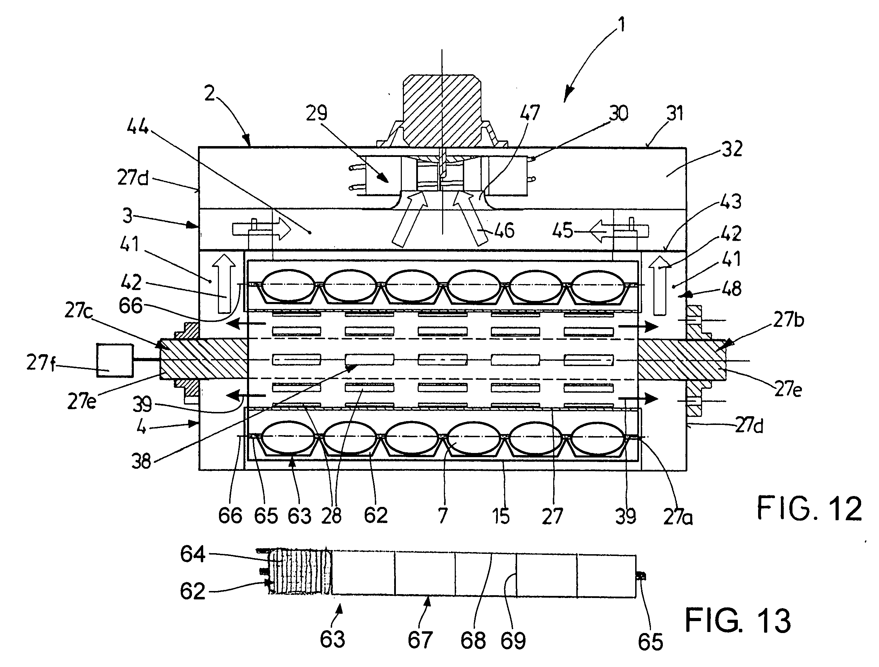

Eine dritte Ausführungsform eines erfindungsgemäßen Backofens ist in den Fig. 12 bis 14 dargestellt. Der Antrieb der Begrenzungswände 15, 27 des Backraums 16 ist bei dieser Ausführungsform entsprechend derjenigen nach den Fig. 9 bis 11 gestaltet.

Aufnahmeabschnitte 62 sind bei dieser Ausführungsform als insgesamt acht Gruppen 63 mit jeweils sechs Aufnahmekörben 64 für jeweils ein Stück Backgut 7 ausgebildet. Auch andere Anzahlen von Gruppen 63, z. B. zehn Gruppen 63 und von Aufnahmekörben 64 pro Gruppe 63, z. B. fünf Aufnahmekörbe 64, sind möglich. Die Gruppen 63 sind zwischen der inneren Begrenzungswand 27 und der äußeren Begrenzungswand 15 des Backraums 16 angeordnet. Jede Gruppe 63 kann eine Reihe von insgesamt sechs längs der Rotationsachse der Begrenzungswände 15, 27 aufgereihte Stücke Backgut 7 aufnehmen. Insgesamt liegen beim Backofen nach den Fig. 10 bis 12 achtundvierzig Aufnahmeabschnitte 62 vor.

Jede Gruppe 63 von Aufnahmeabschnitten 62 ist über Axial-Radiallager 65 an den den Backraum 16 stirnseitig abschließenden Stirnwänden 27a gelagert, so dass jede Gruppe 63 um eine individuelle Rotationsachse 66 längs der Reihung der Aufnahmeabschnitte 62 drehbar ist. Die einzelnen Aufnahmeabschnitte 62 sind einseitig offen. Die Größe der Aufnahmekörbe 64, insbesondere deren Tiefe, ist auf die Form und Größe der einzelnen Stücke Backgut 7 derart abgestimmt, dass der Gesamtschwerpunkt eines ein Stück Backgut 7 enthaltenden Aufnahmeabschnitts 62 auf der dem Boden des Aufnahmekorbes 64 zugewandten Seite der Rotationsachse 66 einer Gruppe 63 liegt. Die Gruppe 63 stellt damit ein Gehänge für Backgut 7 dar.

In Fig. 13 ist eine einzelne Gruppe 63 von Aufnahmeabschnitten 62 dargestellt, wobei zur Veranschaulichung fünf der insgesamt sechs Aufnahmekörbe 64 weggelassen sind. Dargestellt ist nur der äußerste linke Aufnahmekorb 64. Dieser ist aus Drahtgeflecht gefertigt. Das Backgut 7 kann daher auch von der Auflageseite, mit der es am Aufnahmekorb 64 anliegt, mit Umluft umströmt werden. Die Aufnahmekörbe 64 einer Gruppe 63 werden von einem gemeinsamen Tragrahmen 67 aus Aluminium getragen. Auch andere Materialien für den Tragrahmen 67 sind möglich. Jeder Aufnahmekorb 64 ist dabei in einen rechteckigen Rahmenabschnitt 68 des Tragrahmens 67 eingehängt. Die einzelnen Rahmenabschnitte 68 schließen direkt aneinander an, so dass eine Querstrebe 69 zwischen zwei Rahmenabschnitten 68 diese beiden Rahmenabschnitte 68 gleichzeitig begrenzt.

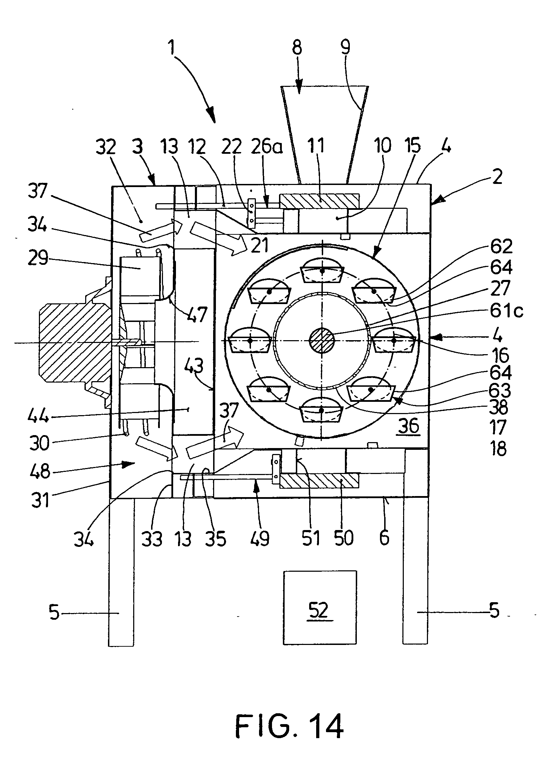

In Fig. 14 ist gezeigt, wie bedingt durch die oben erläuterte Schwerpunktslage der das Backgut 7 enthaltenden Aufnahmeabschnitte 62 und bedingt durch die Lagerung der Gruppen 63 diese beim Umlauf um die Rotationsachse der Antriebswelle 67e immer eine Orientierung derart beibehalten, dass der Aufnahmekorb 64 unterhalb des Stückes Backgut 7 zu liegen kommt und dieses somit trägt.

Die Beschickung bzw. Entleerung des Backofens 1 erfolgt analog zu derjenigen, die oben im Zusammenhang mit der Ausführung nach den Fig. 9 bis 11 schon beschrieben wurde. Bei der Beschickung der Aufnahmeabschnitte 62 mit Backgut 7 wird der Zugabeschieber 11 solange geöffnet, bis jeder Aufnahmeabschnitt 62 der dem Zugabeschieber 11 benachbart gelegenen Gruppe 63 mit einem Stück Backgut 7 beschickt ist. Zur Entleerung der Aufnahmeabschnitte 62 im dem Ausgabeschieber 50 benachbarten Bereich wird mit Hilfe eines in den Backraum 16 eingeführten nicht dargestellten Mitnehmers eine Zwangskippung dieser Gruppe 63 um ihre individuelle Drehachse herbeigeführt, wodurch das Backgut 7 aus den Aufnahmekörben 64 dieser Gruppe durch die Durchtrittsöffnung 61 a und den geöffneten Ausgabeschieber 50 in den Ausgabekorb 52 fällt.

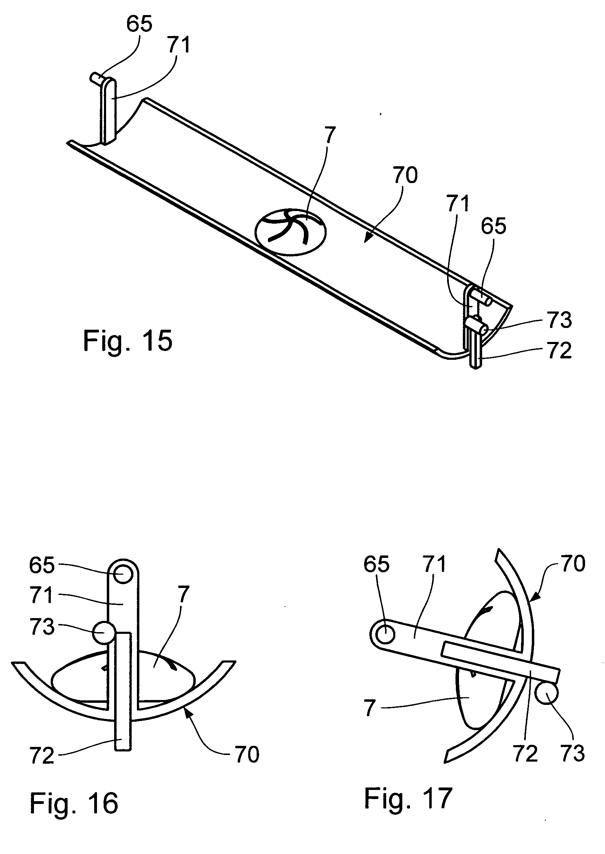

In den Fig. 15 bis 17 ist eine zu den Gruppen 63 der Ausführung nach den Fig. 12 bis 14 alternative Aufnahme des Backguts 7 in einem Gehänge dargestellt. Komponenten, die denjenigen entsprechen, die schon unter Bezugnahme insbesondere auf Fig. 13 beschrieben wurden, tragen die gleichen Bezugszeichen und werden nicht nochmals im Einzelnen erläutert.

Als Aufnahmeabschnitt dient beim Gehänge nach den Fig. 15 bis 17 eine Aufnahmerinne 70, die sich wie die Gruppe 63 der Ausführung nach den Fig. 12 bis 14 längs der Rotationsachse der Backraumwände 15, 27 erstreckt. Die Aufnahmerinne 70 dient zur Aufnahme z. B. von fünf Stücken Backgut 7. An ihren beiden stirnseitigen Enden ist die Aufnahmerinne 70 über aufrechte Verbindungsstangen 71 mit den Lagerstiften der Axial/Radiallager 65 verbunden. An der der Aufnahmerinne 70 gegenüberliegenden Seite einer der Verbindungsstangen 71 ist fest mit der Aufnahmerinne 70 eine Mitnehmerstange 72 angebracht, welche sich parallel zur Verbindungsstange 71 erstreckt und nach unten über den Boden der Aufnahmerinne 70 hinaus übersteht.

Die Mitnehmerstange 72 wirkt mit einem Mitnehmerbolzen 73, welcher dem im Zusammenhang mit der Ausführung nach den Fig. 12 bis 14 angesprochenen Mitnehmer entspricht, wie folgt zusammen: Zur Entleerung der Aufnahmerinnen 70 wird der Mitnehmerbolzen 73 von außen in den Backraum 16 eingeschoben, bis er auf einer Höhe angekommen ist, welche dem ihm zugewandten stirnseitigen Ende der Aufnahmerinnen 70 entspricht. Diese Position des Mitnehmerbolzens 73 ist in den Fig. 15 bis 17 dargestellt. Beim Entleeren der Aufnahmerinnen 70 wird die innere Begrenzungswand 27 mitsamt den Aufnahmerinnen 70 aus Sicht der Fig. 16 und 17 im Uhrzeigersinn gedreht. Die Mitnehmerstange 72 der zu entleerenden Aufnahmerinne 70 kommt dabei in Kontakt mit dem Mitnehmerbolzen 73, wie in den Fig. 15 und 16 dargestellt. Anschließend dreht die innere Begrenzungswand 27 weiter, wobei die Aufnahmerinne 70 um die von den Axial/Radiallagern 65 vorgegebene Schwenkachse verschwenkt wird. Hierbei gleitet der Mitnehmerbolzen 73 an der Mitnehmerstange 72 entlang. Eine End-Schwenkstellung bei diesem Mitnahmevorgang ist in Fig. 17 gezeigt. In dieser Stellung ist die Aufnahmerinne 70 soweit entgegen dem Uhrzeigersinn um die Gelenkachse der Axial/Radiallager 65 verschwenkt, dass das Backgut 7 aus der Aufnahmerinne 70 durch den Ausgabeschieber 50 in den Ausgabebehälter 52 fällt.

Beim Weiterdrehen der inneren Begrenzungswand 27 kommt die Mitnehmerstange 72 vom Mitnehmerbolzen 73 frei, so dass sich die Aufnahmerinne 70 wieder in eine der Fig. 16 entsprechende Position einpendelt.

Bei der Ausführung des Backofens nach den Fig. 1 bis 8 muss die äußere Begrenzungswand 15 des Backraums 16 nicht zwingend drehbar sein. Es ist alternativ vorstellbar, die äußere Begrenzungswand 15 als starre Wand auszuführen. Bei der Ausführungsform nach den Fig. 12 bis 14 kann die zylindrische äußere Begrenzungswand 15 auch ganz entfallen. In diesem Fall stellt die Innenwand des Backraumgehäuses 4 die äußere Begrenzungswand des Backraums 16 dar.

## Patentansprüche

1. Backofen (1)
- mit einem Zugabeabschnitt mit einer Zugabeöffnung (10) zur Zugabe von Backgut (7),
- mit einem Backraum (16)
- mit einem Ausgabeabschnitt mit einer Ausgabeöffnung (51) zur Ausgabe von Backgut (7),
- mit einer Umluft-Einrichtung, welche umfasst:
-- eine einen Umluftstrom erzeugende Umluftquelle (29),
-- eine Umluft-Heizeinrichtung (30),
-- einen Umluft-Führungskanal (48), der abschnittsweise durch den Backraum (16) gebildet ist,
- wobei der Backraum mindestens einen Aufnahmeabschnitt (16a; 61; 62; 70) für Backgut und eine äußere Begrenzungswand (15) umfasst,
**gekennzeichnet durch**
- eine Antriebseinrichtung (27f), mittels der der mindestens eine Aufnahmeabschnitt (16a; 61; 62; 70) um eine horizontal verlaufende Rotationsachse drehbar angetrieben ist.

2. Backofen nach Anspruch 1, **dadurch gekennzeichnet, dass**
- die äußere Begrenzungswand (15) des Backraums (16) um eine horizontal verlaufende Rotationsachse rotationssymmetrisch ist, und
- dass mit der Antriebseinrichtung (27f) die äußere Begrenzungswand (15) um die Rotationsachse drehbar angetrieben ist.

3. Backofen nach Anspruch 2, **dadurch gekennzeichnet, dass** der Backraum (16) neben der äußeren Begrenzungswand (15) noch eine innere Begrenzungswand (27) aufweist.

4. Backofen nach Anspruch 2 oder 3, **dadurch gekennzeichnet, dass** die äußere (15) und gegebenenfalls auch die innere (27) Begrenzungswand Umluft-Durchtrittsöffnungen (28) aufweisen, welche insbesondere eine Form und Größe haben, die derart an die Gestalt des zu backenden Backguts (7) angepasst sind, dass dieses bei einer angetriebenen Drehung der äußeren Begrenzungswand (15) in den Umluft-Durchtrittsöffnungen (28) gehalten wird.

5. Backofen nach einem Ansprüche 2 bis 4, **dadurch gekennzeichnet, dass** in der äußeren Begrenzungswand (15) eine verschließbare Backgut-Durchtrittsöffnung ( 14; 61 a) für Backgut (7) angeordnet ist, die je nach Drehposition der äußeren Begrenzungswand (15) mit der Zugabeöffnung (10) oder der Ausgabeöffnung (51) zur Zugabe oder Ausgabe von Backgut (7) zusammenwirkt.

6. Backofen nach Anspruch 5, **gekennzeichnet durch** eine Durchtrittstür (17), welche mittels eines Aktuators (13) zwischen einer Backposition, in der die Durchtrittstür (17) die Backgut-Durchtrittsöffnung (14) verschließt, und einer Zugabeposition, in der eine Zugabe von Backgut (7) **durch** die Durchtrittstür (17) möglich ist, verlagerbar ist.

7. Backofen nach einem der Ansprüche 1 bis 6, **gekennzeichnet durch** eine insbesondere oberhalb des Backraums (16) angeordnete Backofen-Zugabetür (11), die mittels eines Aktuators (13) zwischen einer Backposition, in der die Backofen-Zugabetür (11) den Zugabeabschnitt verschließt, und einer Zugabeposition, in der eine Zugabe von Backgut (7) **durch** den Zugabeabschnitt möglich ist, verlagerbar ist.

8. Backofen nach einem der Ansprüche 1 bis 7, **gekennzeichnet durch** eine insbesondere unterhalb des Backraums (16) angeordnete Backofen-Ausgabetür (50), die mittels eines Aktuators (13) zwischen einer Backposition, in der die Backofen-Ausgabetür (50) den Ausgabeabschnitt verschließt, und einer Ausgabeposition, in der eine Ausgabe von Backgut (7) **durch** den Ausgabeabschnitt möglich ist, verlagerbar ist.

9. Backofen nach den Ansprüchen 7 oder 8, **dadurch gekennzeichnet, dass**
- die äußere Begrenzungswand (15) zur Verlagerung der Durchtrittstür (17) mit dem mindestens einen Aktuator (13) für die Backofen-Zugabetür (11) und/oder die Backofen-Ausgabetür (50) mechanisch gekoppelt ist, wobei
- die mechanische Kopplung (26a, 49) vorzugsweise mindestens einen mit der Durchtrittstür (17) oder einer Backofen-Tür (11, 50) verbundenen Mitnehmer (18, 24) umfasst, welcher zum Öffnen und/oder Schließen der Durchtrittstür (17) mit mindestens einem mit einer Backofen-Tür (11, 50) oder der Durchtrittstür (17) verbundenen Gegenkörper (20, 26) bei der Drehung der äußeren Begrenzungswand (15) zusammenwirkt,
- und wobei insbesondere zwei Gegenkörper (20, 26) pro Backofen-Tür (11, 50) derart vorgesehen sind, dass ein Gegenkörper (20) mit dem Mitnehmer (18) zum Öffnen der Durchtrittstür (17) und ein Gegenkörper (20) mit dem Mitnehmer (18) zum Schließen der Durchtrittstür (17) zusammenwirkt.

10. Backofen nach einem der Ansprüche 7 bis 9, **dadurch gekennzeichnet, dass** die Backraum-Zugabetür (11), die Backraum-Ausgabetür (50) und die Durchtrittstür (17) derart ausgeführt sind, dass sie gesteuert verlagert werden können.

11. Backofen nach einem der Ansprüche 1 bis 10, **gekennzeichnet durch** eine an den Backraum (16) angeschlossene und gesteuert zuschaltbare Vakuumpumpe, mit der im Backraum (16) ein vorgegebener Unterdruck einstellbar ist.

12. Backofen nach einem der Ansprüche 1 bis 11, **gekennzeichnet durch** eine an den Backraum (16) angeschlossene und gesteuert zuschaltbare Beschwadungseinrichtung, mit der der Backraum (16) mit Schwaden versorgt werden kann.

13. Backofen nach einem der Ansprüche 3 bis 12, **gekennzeichnet durch** eine Mehrzahl von zwischen der äußeren Begrenzungswand (15) und der inneren Begrenzungswand (27) bezogen auf die Rotationsachse radial verlaufenden Trennwänden (60), welche den Backraum (16) in eine Mehrzahl von Aufnahmeabschnitten (61) für Backgut (7) unterteilt.

14. Backofen nach einem der Ansprüche 1 bis 13, **gekennzeichnet durch** eine Mehrzahl von insbesondere hängend gelagerten Aufnahmeabschnitten (62) für jeweils ein Stück Backgut (7), wobei bevorzugt jeder Aufnahmeabschnitt (62) einen einseitig offenen und drehbar gelagerten Aufnahmekorb (64) aufweist.

15. Backofen nach Anspruch 14, **dadurch gekennzeichnet, dass** jeweils eine Gruppe (63) von Aufnahmeabschnitten (62) miteinander starr verbunden und gemeinsam drehbar gelagert ist, wobei bevorzugt die Gruppe (63) von Aufnahmeabschnitten (62) einen gemeinsamen, drehbar gelagerten Tragrahmen (67), insbesondere aus Aluminium, für die Aufnahmekörbe (64) der Gruppe (63) aufweist.

16. Backofen nach einem der Ansprüche 1 bis 13, **gekennzeichnet durch** eine Mehrzahl von insbesondere hängend gelagerten Aufnahmeabschnitten (70) für jeweils eine Mehrzahl von Stücken Backgut (7), wobei jeder Aufnahmeabschnitt (70) drehbar gelagert ist.
